(19) Europäisches Patentamt / European Patent Office / Office européen des brevets

(11) **EP 3 431 549 B1**

(12) **EUROPEAN PATENT SPECIFICATION**

(45) Date of publication and mention of the grant of the patent:
**03.08.2022 Bulletin 2022/31**

(21) Application number: **17766622.9**

(22) Date of filing: **13.03.2017**

(51) International Patent Classification (IPC):
**C08L 71/03** (2006.01)  **C08G 65/24** (2006.01)
**F16C 13/00** (2006.01)  **G03G 15/00** (2006.01)

(52) Cooperative Patent Classification (CPC):
**C08G 65/24; C08L 71/03; F16C 13/00; G03G 15/00**

(86) International application number:
**PCT/JP2017/010000**

(87) International publication number:
**WO 2017/159622 (21.09.2017 Gazette 2017/38)**

(54) **CROSSLINKED RUBBER CONTAINING POLYETHER RUBBER, AND ELECTROCONDUCTIVE ROLL**

VERNETZTER KAUTSCHUKHALTIGER POLYETHERKAUTSCHUK UND ELEKTRISCH LEITENDE ROLLE

PRODUIT RÉTICULÉ DE CAOUTCHOUC COMPRENANT UN CAOUTCHOUC DE POLYÉTHER, ET ROULEAU CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2016  JP 2016053435**

(43) Date of publication of application:
**23.01.2019 Bulletin 2019/04**

(73) Proprietor: **Zeon Corporation**
**Tokyo 100-8246 (JP)**

(72) Inventor: **MESUDA, Ikuya**
**Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:
**WO-A1-2014/054735     WO-A1-2014/157045**
**JP-A- S5 433 588       JP-A- H08 183 813**
**JP-A- 2011 032 339**

**Description**

TECHNICAL FIELD

The present invention relates to a cross-linked rubber containing a polyether rubber and to a conductive roll.

BACKGROUND ART

In conductive mechanisms in image-forming apparatuses such as printer, electronic photocopier, and facsimile apparatus, various conductive rolls are used, such as a charging roll for uniformly charging a photosensitive drum, a toner supply roll for conveying a toner, a developing roll for adhering the toner to a photoreceptor, and a transfer roll for transferring a toner image from the photoreceptor to paper. Such conductive rolls are required to have various capabilities according to their applications. JP 2011 032339 discloses a cross-linked polyether polymer and a method for producing it that is used to form electroconductive rolls.

As a method of imparting electroconductivity to a rubber that constitutes such a conductive roll, a method involving kneading and dispersing a small amount of a conductivity imparting material such as carbon black and metal oxide in the rubber to thereby control electrical resistance is well known. However, this method is problematic in that it is difficult to control the dispersibility of the small amount of the conductivity imparting material to be kneaded, also the state of dispersion of the conductivity imparting material changes due to the flow of the rubber during forming and cross-linking, and, as a result, the electrical resistance value is varied, and a clear image is unlikely to be obtained.

Accordingly, as a method of solving variation in electrical resistance value, a cross-linked product of a polyether rubber and the like which have semiconductivity in the rubber itself without adding a conductivity imparting material have been used in conductive roll applications.

A conductive roll in which such a polyether rubber is used has the problem of photoreceptor contamination that the component contained in the polyether rubber bleed out and thereby contaminate a photoreceptor. In this regard, as a conductive roll in which a polyether rubber is used and which suppresses photoreceptor contamination, for example, Patent Document 1 discloses a conductive roll having at least one elastic layer on the outer circumference of a conductive axis, wherein the elastic layer is composed of a rubber composition containing a polyether rubber containing an epichlorohydrin unit and a polyether polyol having a weight average molecular weight (Mw) of 3000 to 10000.

RELATED ART

PATENT DOCUMENTS

Patent Document 1: Japanese Patent Laid-Open No. 2006-39394

SUMMARY OF THE INVENTION

PROBLEM TO BE SOLVED BY THE INVENTION

According to the conductive roll disclosed in Patent Document 1 described above, bleed-out of the component contained in the polyether rubber can be suppressed to some extent, and therefore photoreceptor contamination can be suppressed to some extent. However, in the conductive roll disclosed in Patent Document 1, photoreceptor contamination is suppressed for a certain period of time after the beginning of use, but if the conductive roll is continuously used for a long period of time, photoreceptor contamination occurs, and, accordingly, in view of long-term use, it cannot be said that photoreceptor contamination is sufficiently suppressed.

In particular, conventionally, irrespective of the technique disclosed in Patent Document 1 described above, such a photoreceptor contamination problem is an unavoidable problem when a polyether rubber is used. Accordingly, when using a polyether rubber in a conductive roll, it is necessary to apply a coating to a conductive roll or mix another rubber. The method for applying a coating is problematic in increased costs and, also, the method for mixing another rubber is problematic in that the electroconductivity of a conductive roll is impaired, and is problematic in that photoreceptor contamination occurs in the case of long-term use.

The present invention was made in view of such a circumstance, and an object is to provide a cross-linked rubber containing a polyether rubber where photoreceptor contamination is effectively suppressed even when used for a long period of time.

MEANS FOR SOLVING THE PROBLEM

The inventor conducted diligent research to achieve the above object, and found that the above object can be achieved, in a cross-linked rubber obtained by cross-linking a polyether rubber composition containing a polyether rubber containing an epihalohydrin monomer unit and a predetermined ratio of ethylene oxide monomer unit, and a cross-linking agent, by suppressing an acetone extraction amount when the cross-linked rubber is immersed in acetone to a specific range, and thereby completed the present invention.

That is, the present invention provides a cross-linked rubber obtained by cross-linking a polyether rubber composition containing a polyether rubber and a cross-linking agent, wherein the polyether rubber contains an epihalohydrin monomer unit and an ethylene oxide monomer unit and has a ratio of content of the ethylene oxide monomer unit of 50 to 80 mol% in a total monomer unit, and an acetone extraction amount when the cross-linked rubber is immersed in acetone at 23°C for 72 hours is 3.5 wt% or less.

Also, the present invention provides a conductive roll having the above cross-linked rubber.

Also, the present invention provides a method of production of a polyether rubber containing an epihalohydrin monomer unit and an ethylene oxide monomer unit and having a ratio of content of the ethylene oxide monomer unit of 50 to 80 mol% in a total monomer unit, the method comprising copolymerizing a monomer mixture containing an epihalohydrin and ethylene oxide in a solvent to obtain a polymer solution; coagulating a polymer from the polymer solution by steam stripping to obtain a crumb slurry containing a crumbed polymer; cooling the crumb slurry; and taking out the polymer from the crumb slurry when the crumb slurry is cooled to 60°C or less.

It is preferable that the method of production of a polyether rubber further comprise washing the polymer with acetone after taking out the polymer from the crumb slurry.

Further, the present invention provides a method of production of a cross-linked rubber, the method comprising adding a cross-linking agent to a polyether rubber obtained by the above production method to obtain a polyether rubber composition; and cross-linking the polyether rubber composition.

EFFECTS OF THE INVENTION

According to the present invention, it is possible to provide a cross-linked rubber containing a polyether rubber where photoreceptor contamination is effectively suppressed even when used for a long period of time, and a conductive roll having such a cross-linked rubber.

DESCRIPTION OF EMBODIMENTS

The cross-linked rubber of the present invention is obtained by cross-linking a polyether rubber composition containing a polyether rubber and a cross-linking agent, wherein

the polyether rubber contains an epihalohydrin monomer unit and an ethylene oxide monomer unit and has a ratio of content of the ethylene oxide monomer unit of 50 to 80 mol% in a total monomer unit, and
an acetone extraction amount when the cross-linked rubber is immersed in acetone at 23°C for 72 hours is 3.5 wt% or less.

<Polyether rubber>

First, the polyether rubber contained in the polyether rubber composition for forming the cross-linked rubber of the present invention will now be described.

The polyether rubber used in the present invention is a rubber containing an epihalohydrin monomer unit and an ethylene oxide monomer unit and having a ratio of content of the ethylene oxide monomer unit of 50 to 80 mol% in a total monomer unit.

As an epihalohydrin monomer forming the epihalohydrin monomer unit, for example, epichlorohydrin, epibromohydrin, epiiodohydrin, epifluorohydrin, and the like may be mentioned. The epihalohydrin monomers may be used singly or as a combination of two or more. Among the epihalohydrin monomers, epichlorohydrin is preferable.

The ratio of content of the epihalohydrin monomer unit in the polyether rubber used in the present invention is preferably 49 to 19 mol%, more preferably 48 to 23 mol%, and further preferably 43 to 23 mol% in the total monomer unit. By making the ratio of content of the epihalohydrin monomer unit to be in the above range, it is possible to make a cross-linked rubber to be obtained low in electrical resistance value and excellent in mechanical properties.

The ethylene oxide monomer unit is a unit formed of ethylene oxide. The ratio of content of the ethylene oxide monomer unit in the polyether rubber used in the present invention is 50 to 80 mol%, preferably 50 to 75 mol%, and more preferably 55 to 75 mol% in the total monomer unit. An excessively low ratio of content of the ethylene oxide monomer unit results in a large electrical resistance value although the photoreceptor contamination problem tends to be reduced. On the other hand, an excessively high ratio of content of the ethylene oxide monomer unit results in poor mechanical properties.

It is preferable that the polyether rubber used in the present invention contain a vinyl group-containing oxirane monomer unit in addition to the epihalohydrin monomer unit and the ethylene oxide monomer unit.

As a vinyl group-containing oxirane monomer forming the vinyl group-containing oxirane monomer unit, for example, ethylenically unsaturated glycidyl ethers such as vinyl glycidyl ether, allyl glycidyl ether, butenyl glycidyl ether, and o-allyl phenyl glycidyl ether; diene monoepoxides such as butadiene monoepoxide; glycidyl esters of ethylenically unsaturated carboxylic acid, such as glycidyl acrylate and glycidyl methacrylate; and the like may be mentioned. The vinyl group-containing oxirane monomers may be used singly or as a combination of two or more. Among these, ethylenically unsaturated glycidyl ethers are preferable, and allyl glycidyl ether is particularly preferable.

The ratio of content of the vinyl group-containing oxirane monomer unit in the polyether rubber used in the present invention is 15 to 1 mol%, preferably 12 to 2 mol%, and more preferably 10 to 2 mol% in the total monomer unit. By making the ratio of content of the vinyl group-containing oxirane monomer unit to be in the above range, it is possible to make a cross-linked rubber to be obtained excellent in ozone resistance while good in the shapeability of the polyether rubber.

In addition to the epihalohydrin monomer unit, the ethylene oxide monomer unit, and the vinyl group-containing oxirane monomer unit which are used in accordance with need, the polyether rubber used in the present invention may further contain a unit of a monomer that is copolymerizable therewith.

As the copolymerizable monomer, for example, an alkylene oxide other than ethylene oxide, and the like can be used as well.

As the alkylene oxide other than ethylene oxide, chain alkylene oxides such as propylene oxide, 1,2-epoxybutane, 1,2-epoxy-isobutane, 2,3-epoxybutane, 1,2-epoxyhexane, 1,2-epoxyoctane, 1,2-epoxydecane, 1,2-epoxytetradecane, 1,2-epoxyhexadecane, 1,2-epoxyoctadecane, and 1,2-epoxyeicosane; cyclic alkylene oxides such as 1,2-epoxycyclopentane, 1,2-epoxycyclohexane, and 1,2-epoxycyclododecane; and the like may be mentioned.

The copolymerizable monomers may be used singly or as a combination of two or more. The ratio of content of the copolymerizable monomer unit is preferably 20 mol% or less, more preferably 10 mol% or less, and further preferably 5 mol% or less in the total monomer unit.

The polyether rubber used in the present invention can be obtained by subjecting a monomer mixture containing an epihalohydrin and ethylene oxide to copolymerization (ring-opening copolymerization) in a solvent. The polymerization method is not specifically limited, but a solution polymerization method, a solvent slurry polymerization method, or the like is suitably used.

The polymerization catalyst used in the polymerization is not specifically limited so long as it is a general catalyst for polyether polymerization. As the polymerization catalyst, for example, a catalyst obtained by reacting organic aluminum with water and acetyl acetone (Japanese Patent Publication No. 35-15797); a catalyst obtained by reacting triisobutyl aluminum with phosphoric acid and triethylamine (Japanese Patent Publication No. 46-27534); a catalyst obtained by reacting triisobutyl aluminum with an organic acid salt of diazabicycloundecene and phosphoric acid (Japanese Patent Publication No. 56-51171); a catalyst obtained by reacting a partial hydrolyzate of aluminum alkoxide with an organo zinc compound (Japanese Patent Publication No. 43-2945); a catalyst obtained by reacting an organo zinc compound with polyvalent alcohol (Japanese Patent Publication No. 45-7751); a catalyst obtained by reacting dialkyl zinc with water (Japanese Patent Publication No. 36-3394); and a catalyst obtained by reacting tributyl tin chloride with tributyl phosphate (Japanese Patent No. 3223978); and the like may be mentioned.

The solvent used in the polymerization is not specifically limited so long as it is an inert solvent, and, for example, aromatic hydrocarbons such as benzene and toluene; saturated linear hydrocarbons such as n-pentane and n-hexane; saturated cyclic hydrocarbons such as cyclopentane and cyclohexane; and the like may be used. Among these, when the polymerization is carried out by the solution polymerization method, aromatic hydrocarbons are preferably used from the viewpoint of solubility of the polyether rubber, and toluene is more preferable.

The polymerization reaction temperature is preferably 20 to 150°C, and more preferably 50 to 130°C. The polymerization can be carried out according to any mode including a batch type, a semi-batch type, a continuous type, and the like.

The polyether rubber used in the present invention may be any copolymer type of either a block copolymer or a random copolymer, but a random copolymer is preferable because the crystallinity of polyethylene oxide is more reduced, and rubber elasticity is unlikely to be impaired.

In the present invention, when obtaining a solid polyether rubber from a polymer solution that has been obtained by copolymerizing a monomer mixture containing the epihalohydrin and ethylene oxide in a solvent, it is preferable to employ the following method from the viewpoint of configuring the acetone extraction amount when made into a cross-linked rubber to be in the above range.

That is, in the present invention, from the viewpoint of configuring the acetone extraction amount when made into a cross-linked rubber to be in the above range, it is preferable that the polymer is made to be coagulated from the polymer solution by steam stripping to obtain a crumb slurry containing a crumbed polymer, then the obtained crumb slurry is made to be cooled, and when the crumb slurry is cooled to 60°C or less, a solid polyether rubber is taken out from the crumb slurry.

By employing such a method, unreacted component and low molecular weight component in the obtained polyether rubber can be appropriately and conveniently removed, and it is thereby possible to make a polyether rubber to be obtained one where the contents of unreacted component and low molecular weight component are suppressed to extremely low levels. As a result, the acetone extraction amount when made into a cross-linked rubber can be suppressed to a low level.

Steam stripping used in the present invention is a common method as a method of separating a polymer and a solvent from a polymer solution. The method of steam stripping is not specifically limited, and, for example, a method that involves introducing a polymer solution into steam-added hot water, and distilling the solvent together with water vapor to precipitate crumb of the polymer in hot water and thus form a crumb slurry in which the crumbed polymer is dispersed in hot water, and the like may be mentioned. It is preferable to carry out such an operation under reduced pressure. Before performing steam stripping, known anti-aging agent, stabilizer for coagulated crumb, scale inhibitor, and the like may be added to the polymer solution as desired.

The polymer concentration in the polymer solution when carrying out steam stripping is not specifically limited, but it is preferably regulated to 1 to 30 wt%, more preferably regulated to 2 to 20 wt%, and particularly preferably regulated to 3 to 15 wt%. Possibly, an excessively low polymer concentration in the polymer solution results in a poor solvent removal efficiency and, on the other hand, an excessively high polymer concentration in the polymer solution results in an excessively large particle size of precipitated crumb, thus adversely affecting the subsequent steps.

The temperature during steam stripping is preferably not lower than the boiling point of a solvent used in the polymerization or the azeotropic temperature of the solvent and water if the solvent and water azeotrope, and specifically is preferably 85°C or more, and more preferably 90°C or more. An excessively low temperature during steam stripping results in impaired solvent removal efficiency.

Then, the crumb slurry, in which the crumbed polymer is dispersed in hot water, obtained by steam stripping is cooled, a polyether rubber is taken out from the crumb slurry when the crumb slurry is cooled to 60°C or less, and dried as necessary, and thus a polyether rubber can be obtained.

According to the findings of the present inventors, although unreacted component and low molecular weight component contained in the polyether rubber can be removed by steam stripping, unreacted component and low molecular weight component cannot be sufficiently removed solely by steam stripping and, in this regard, cooling to the above-mentioned temperature or less after carrying out steam stripping enables unreacted component and low molecular weight component to be sufficiently eluted into hot water in the crumb slurry, thereby making it possible to sufficiently remove unreacted component and low molecular weight component. In particular, in a method involving coagulating a polymer from a polymer solution by steam stripping, it is usual practice to immediately take out a solid polyether rubber from a crumb slurry without cooling after completion of steam stripping. On the other hand, according to the present invention, cooling is carried out after completion of steam stripping, and when the crumb slurry is cooled to 60°C or less, a polyether rubber is taken out from the crumb slurry, thereby making it possible to sufficiently remove unreacted component and low molecular weight component. The polyether rubber may be taken out from the crumb slurry when the crumb slurry is cooled to 60°C or less, preferably when cooled to 20 to 60°C, more preferably when cooled to 20 to 50°C, and further preferably when cooled to 30 to 50°C.

The cooling method when cooling the clam slurry is not specifically limited, but is preferably a method involving leaving the clam slurry to stand still at room temperature (23°C) from the viewpoint of more appropriately removing unreacted component and low molecular weight component contained in the polyether rubber.

The method of taking out the polyether rubber from the crumb slurry is not specifically limited, but, for example, a method involving filtration using a sieve such as a rotary type screen and a vibrating screen; a centrifugal dehydrator; and the like may be mentioned.

In the present invention, from the viewpoint of further reducing unreacted component and low molecular weight component contained in the polyether rubber, the polyether rubber taken out from the crumb slurry may be washed with acetone before being dried or after being dried. The method of washing with acetone is not specifically limited, but a method involving immersing the polyether rubber in acetone, a method further involving stirring it, and the like may be mentioned. The immersion time or the stirring time when washing with acetone is preferably 5 to 24 hours and more preferably 12 to 24 hours, and the temperature is preferably 10 to 40°C and more preferably 15 to 35°C.

In the above, a method was exemplified in which coagulation is carried out by steam stripping, the temperature at which the polyether rubber is taken out from the obtained crumb slurry is 60°C or less to thus remove unreacted component and low molecular weight component contained in the polyether rubber and, thereby, the acetone extraction amount when made into a cross-linked rubber is 3.5 wt% or less. The method, however, is not specifically limited thereto, and any method may be used so long as it is capable of providing an acetone extraction amount when made into a cross-linked rubber of 3.5 wt% or less.

The Mooney viscosity (ML1+4 (100°C)) of the polyether rubber used in the present invention is preferably 10 to 120, more preferably 20 to 90, and particularly preferably 30 to 70. An excessively high Mooney viscosity may result in inferior shapeability, generation of swell (that is, the diameter of an extruded product is larger than the diameter of a die during extrusion molding), and poor dimensional stability. An excessively low Mooney viscosity may result in poor mechanical strength of a cross-linked rubber to be obtained.

<Polyether rubber composition>

The polyether rubber composition used in the present invention contains the above-described polyether rubber and a cross-linking agent.

The cross-linking agent is not specifically limited, but, for example, sulfur such as powdery sulfur, precipitated sulfur, colloidal sulfur, insoluble sulfur, and highly dispersed sulfur; sulfur-containing compounds such as sulfur monochloride, sulfur dichloride, morpholine disulfide, alkyl phenol disulfide, dibenzothiazyl disulfide, caprolactam disulfide, phosphorus-containing polysulfide, and polymer polysulfide; organic peroxides such as dicumyl peroxide and di-t-butyl peroxide; quinone dioximes such as p-quinone dioxime, and p,p'-dibenzoylquinone dioxime; organic polyvalent amine compounds such as triethylene tetramine, hexamethylene diamine carbamate, and 4,4'-methylene bis-o-chloroaniline; alkyl phenol resins having a methylol group; and the like may be mentioned. Among these, sulfur or a sulfur-containing compound is preferable. These cross-linking agents are used singly or as a combination of two or more. The addition ratio of the cross-linking agent is not specifically limited, but it is preferably 0.1 to 10 parts by weight, more preferably 0.2 to 7 parts by weight, and further preferably 0.3 to 5 parts by weight with respect to 100 parts by weight of the polyether rubber. An excessively small amount of the cross-linking agent to be added may result in a low cross-linking rate and impaired productivity of the cross-linked rubber. On the other hand, an excessive amount of the cross-linking agent to be added may result in an increased hardness of the obtained cross-linking rubber.

When sulfur or a sulfur-containing compound is used as a cross-linking agent, it is preferable to use a cross-linking aid and a cross-linking accelerator in combination. The cross-linking aid is not specifically limited, but, for example, zinc oxide, stearic acid, and the like may be mentioned. The cross-linking accelerator is not specifically limited, but, for example, guanidine-based; aldehyde/amine-based; aldehyde/ammonia-based; thiazole-based; sulfenamide-based; thiourea-based; thiuram-based; and the like may be used. The cross-linking aids and cross-linking accelerators may respectively be used as a combination of two or more.

The amounts of the cross-linking aid and the cross-linking accelerator to be used are not specifically limited, but are preferably 0.01 to 15 parts by weight and more preferably 0.1 to 10 parts by weight with respect to 100 parts by weight of the polyether rubber.

Further, additives that are usually added to known polymers may be contained in the polyether rubber composition used in the present invention. As such additives, for example, acid acceptor, reinforcing agent, filler, antioxidant (anti-aging agent), UV absorbing agent, light stabilizer, tackifier, surfactant, conductivity imparting material, electrolyte material, colorant (dye, pigment), flame retardant, antistatic agent, and the like may be mentioned.

The polyether rubber composition used in the present invention can be prepared by mixing and kneading a polyether rubber, a cross-linking agent, and various compounding agents which are used in accordance with need by a desired method. At the time of mixing and kneading, for example, any kneading/forming machine such as a kneader, Banbury mixer, open roll, calender roll, and extruder may be used singly or in combination for kneading and forming, or the components may be dissolved in solvent, mixed, and then formed after removing the solvent.

<Cross-Linked Rubber>

The cross-linked rubber of the present invention is obtained by cross-linking the above-described polyether rubber composition.

The method of cross-linking the polyether rubber composition is not specifically limited. The cross-linking may be carried out either simultaneously with forming or after forming. The temperature for forming is preferably 20 to 200°C, and more preferably 40 to 180°C. The heating temperature for cross-linking is preferably 130 to 200°C, and more preferably 140 to 200°C. When the temperature for cross-linking is excessively low, a long time may be required for cross-linking, or the cross-linking density of the cross-linked rubber to be obtained may be low. On the other hand, when the temperature for cross-linking is excessively high, forming defects may be yielded. The cross-linking time varies depending on the cross-linking method, cross-linking temperature, shape, or the like. However, when it is within the range of 1 minute or more and 5 hours or less, it is preferable from the viewpoint of the cross-linking density and production efficiency. As a method of heating, any method selected from press heating, oven heating, steam heating, heat wave heating, microwave heating, and the like may be suitably used.

Further, depending on the shape, size, and the like of the cross-linked rubber, cross-linking may not be fully progressed inside the product even when the cross-linking is found on the surface of the product. In such a case, secondary cross-linking may be carried out by further heating. In carrying out the secondary cross-linking, the heating temperature is preferably 100 to 220°C, and more preferably 130 to 210°C. The heating time is preferably 30 minutes to 5 hours.

The acetone extraction amount when the cross-linked rubber of the present invention is immersed in acetone at 23°C for 72 hours is 3.5 wt% or less, preferably 2.5 wt% or less, and more preferably 1.5 wt% or less. According to the present invention, the acetone extraction amount when the cross-linked rubber is immersed in acetone is controlled in the above range, and thereby photoreceptor contamination can be effectively suppressed when the cross-linked rubber of the present invention is used as a conductive roll or the like and, in particular, photoreceptor contamination can be effectively prevented not only when the cross-linked rubber is used for a certain period of time after the beginning of use but also when used for a long period of time.

Accordingly, the cross-linked rubber of the present invention is particularly suitable for conductive material applications such as conductive rolls and conductive blades used in photocopiers, printers, and the like, and, in particular, for conductive roll applications. Also, other than such conductive material applications, the cross-linked rubber of the present invention can be used as a material for shoe soles and hoses; a material for belts such as conveyer belts and escalator handrails; a material for seals and packings; and the like.

EXAMPLES

Below, the present invention will now be more specifically described by way of Examples and Comparative Examples, but the present invention is not limited to the Examples. Below, the "parts" are based on weight unless particularly indicated otherwise. Methods of testing or evaluating physical properties and characteristics are as follows.

[Acetone Extraction Amount of Cross-Linked Rubber]

A polyether rubber composition was formed and cross-linked by a press at a temperature of 170°C for 20 minutes to obtain a sheet-shaped cross-linked product having a length of 15 cm, a width of 8 cm, and a thickness of 2 mm. The obtained sheet-shaped cross-linked product was cut to have a length of 10 mm, a width of 10 mm, and a thickness of 2 mm to provide about 50 g of a cross-linked product sample. Then, 180 g of acetone and about 50 g of the provided cross-linked product sample were placed in a glass bottle that had been weighed in advance, and the cross-linked product sample was immersed at 23°C for 72 hours. Then, the immersed cross-linked product sample was filtered through a 150-mesh wire mesh, and the filtrate was dried in a vacuum dryer at 40°C for 48 hours to obtain acetone extracts. The weight of the acetone extracts was calculated from the difference between the weight of the dried glass bottle and the weight of the glass bottle before use, and from the weight of the acetone extracts determined above, the acetone extraction amount (unit: wt%) was found according to the following formula:

$$\text{Acetone extraction amount (wt\%)} = \text{Weight (g) of acetone extracts} \; / $$

$$\text{Weight (g) of cross-linked product sample used in test} \times 100$$

[Photoreceptor Contamination (Room-Temperature Conditions)]

A polyether rubber composition was formed and cross-linked by a press at a temperature of 170°C for 20 minutes to obtain a sheet-shaped cross-linked product having a length of 15 cm, a width of 8 cm, and a thickness of 2 mm. The obtained sheet-shaped cross-linked product was cut to have a length of 2 cm and a width of 2 cm, then securely attached to a photoreceptor of a commercially available printer (a photoreceptor after repeating 200 times of halftone printing with the same printer in advance), and stored for 72 hours in an atmosphere having a temperature of 23°C and a humidity of 50%. Thereafter, the sheet-shaped cross-linked product was peeled off from the photoreceptor, and halftone printing was performed with the same printer, and the presence or absence of stains on the printed matter was visually checked to make evaluations on the following 3-point scale.

A: No image defects are observed. Practically usable level.
B: Slight image defects are observed when looked carefully. Practically usable level.
C: Severe image defects are created. Practically unusable level.

Note that, in the Examples, a photoreceptor after repeating 200 times of halftone printing in advance was used as a photoreceptor, and in the case of using such a photoreceptor that has been used in advance, photoreceptor contamination is more likely to occur than the case where an unused photoreceptor is used, and accordingly it can be said that the test is carried out under severer conditions than the case where an unused photoreceptor is used (the same also applies to the evaluation of photoreceptor contamination under high-temperature, high-humidity conditions, which will be described below).

[Photoreceptor Contamination (High-Temperature, High-Humidity conditions)]

A sheet-shaped cross-linked product obtained as described above was securely attached to a photoreceptor of a commercially available printer (a photoreceptor after repeating 200 times of halftone printing with the same printer in advance), stored for 72 hours in an atmosphere having a temperature of 45°C and a humidity of 95%, and then stored for 24 hours in an atmosphere having a temperature of 23°C and a humidity of 50%. Thereafter, the sheet-shaped cross-linked product was peeled off from the photoreceptor, and halftone printing was performed with the same printer, and the presence or absence of stains on the printed matter was visually checked to make evaluations on the following 3-point scale. Note that when photoreceptor contamination is suppressed under high-temperature, high-humidity conditions, it can be evaluated that photoreceptor contamination can be suppressed even when used for a long period of time.

> A: No image defects are observed. Practically usable level.
> B: Slight image defects are observed when looked carefully. Practically usable level.
> C: Severe image defects are created. Practically unusable level.

(Example 1)

Preparation of Polymerization Catalyst

A sealed, pressure-resistant glass bottle was nitrogen-purged, charged with 184.8 parts of toluene and 55.2 parts of triisobutylaluminum, cooled by being immersed in ice water, then 103.1 parts of diethyl ether was added to the glass bottle, and stirring was performed. Then, 8.18 parts of phosphoric acid was added to the glass bottle while continuing ice-water cooling, and stirring was further performed. At this time, due to the reaction between triisobutylaluminum and phosphoric acid, the pressure inside the glass bottle increased, and the pressure was released at suitable times accordingly. Then, 8.27 parts of a formic acid salt of 1,8-diaza-bicyclo(5,4,0)undecene-7 was added to the glass bottle, and finally the mixture was subjected to an aging reaction in a hot water bath at 60°C for 1 hour to obtain a catalyst solution.

Production of Polyether Rubber

Separately from above, 196.9 parts of epichlorohydrin, 27.0 parts of allyl glycidyl ether, 20.3 parts of ethylene oxide, and 1947.3 parts of toluene were added to an autoclave. These were stirred in a nitrogen atmosphere while raising the temperature of the inside solution to 70°C, and 10 parts of the catalyst solution prepared above was added to start a reaction. Then, from immediately after the start of the reaction, a solution of 135.8 parts of ethylene oxide dissolved in 287.0 parts of toluene was continuously added over 5 hours at a uniform rate. At the same time, 7 parts of the catalyst solution prepared above was added every 30 minutes over 5 hours. Then, 15 parts of water was added to the reaction system and stirring was performed to terminate the reaction and, further, 38 parts of a 5 wt% toluene solution of 4,4'-thio-bis-(6-tert-butyl-3-methylphenol) as an anti-aging agent was added, and stirring was performed. Then, 25.3 parts of a Na salt of β-naphthalenesulfonic acid formalin condensate (Demol T 45, manufactured by Kao Corporation; active ingredients 45%) was added, and stirring was performed to obtain a polymer solution. The polymer was recovered from a part of the obtained polymer solution, and the monomer composition was measured by $^1$H-NMR, thus verifying that the polymer contained 60 mol% of ethylene oxide unit, 36 mol% of epichlorohydrin unit, 4 mol% of allyl glycidyl ether unit.
Then, steam stripping was performed at 97°C to the obtained polymer solution to obtain a crumb slurry in which a crumbed polymer were dispersed in hot water. Then, the obtained crumb slurry was cooled by being left to stand still at room temperature. When the temperature of the crumb slurry was lowered to 40°C, the polymer was separated by filtration to take out the polymer and vacuum-dried at 60°C for 15 hours, and thus 380 parts of the polymer was obtained.
Then, the obtained polymer was acetone-washed by being immersed in twice as much weight of acetone at 23°C for 24 hours, thereafter supernatant acetone and the polymer were separated by filtration, and the obtained polymer was air-dried and then vacuum-dried at 60°C for 12 hours to obtain a polyether rubber (A-1). The polymer Mooney viscosity (ML1+4, 100°C) of the obtained polyether rubber (A-1) was 50.

Preparation of Polyether Rubber Composition

To open rolls, 100 parts of the polyether rubber (A-1) obtained above, 10 parts of carbon black (product name "Seast SO", made by Tokai Carbon Co., Ltd.) as a filler, 5 parts of zinc oxide (product name "Zinc Oxide #2", made by Seido Chemical Industry Co., Ltd.) as a cross-linking aid, and 1 part of stearic acid as a cross-linking aid were charged and kneaded at a roll temperature of 50°C to obtain a kneaded material. Then, to 50°C open rolls, the obtained kneaded material, 0.5 parts of sulfur (product name "Sulfax PMC", made by Tsurumi Chemical Industry Co., Ltd.) as a cross-linking agent, and 1 part of tetraethylthiuram disulfide (product name "Noccelar TET", made by Ouchi Shinko Chemical Industrial Co., Ltd.) as a cross-linking accelerator were charged and kneaded, and then a sheet-shaped polyether rubber composition was taken out.

Then, the obtained polyether rubber composition was used to form a cross-linked rubber by the method described above, and the acetone extraction amount, photoreceptor contamination (room-temperature conditions), and photoreceptor contamination (high-temperature, high-humidity conditions) were each measured and evaluated. The results are shown in Table 1.

(Example 2)

Production of Polyether Rubber

Except for changing the immersion time when performing acetone washing to 8 hours, the same procedure was followed as in Example 1 to obtain a polyether rubber (A-2).

Preparation of Polyether Rubber Composition

Except for using the polyether rubber (A-2) obtained above in place of the polyether rubber (A-1), the same procedure was followed as in Example 1 to obtain, and evaluate, a polyether rubber composition. The results are shown in Table 1.

(Example 3)

Production of Polyether Rubber

Except for not performing acetone washing, the same procedure was followed as in Example 1 to obtain a polyether rubber (A-3).

Preparation of Polyether Rubber Composition

Except for using the polyether rubber (A-3) obtained above in place of the polyether rubber (A-1), the same procedure was followed as in Example 1 to obtain, and evaluate, a polyether rubber composition. The results are shown in Table 1.

(Example 4)

Production of Polyether Rubber

Except for changing the temperature when taking out the polymer after carrying out steam stripping from the crumb slurry from 40°C to 60°C, the same procedure was followed as in Example 3 to obtain a polyether rubber (A-4) .

Preparation of Polyether Rubber Composition

Except for using the polyether rubber (A-4) obtained above in place of the polyether rubber (A-1), the same procedure was followed as in Example 1 to obtain, and evaluate, a polyether rubber composition. The results are shown in Table 1.

(Comparative Example 1)

Production of Polyether Rubber

Except for changing the temperature when taking out the polymer from the crumb slurry after carrying out steam stripping from 40°C to 90°C, the same procedure was followed as in Example 3 to obtain a polyether rubber (A-5) .

Preparation of Polyether Rubber Composition

Except for using the polyether rubber (A-5) obtained above in place of the polyether rubber (A-1), the same procedure was followed as in Example 1 to obtain, and evaluate, a polyether rubber composition. The results are shown in Table 1.

(Comparative Example 2)

Production of Polyether Rubber

Except for removing toluene using an evaporator in place of steam stripping to coagulate the polymer, the same procedure was followed as in Example 3 to obtain a polyether rubber (A-6).

Preparation of Polyether Rubber Composition

Except for using the polyether rubber (A-6) obtained above in place of the polyether rubber (A-1), the same procedure was followed as in Example 1 to obtain, and evaluate, a polyether rubber composition. The results are shown in Table 1.

(Comparative Example 3)

Production of Polyether Rubber

Except for further performing a washing of the polymer with pure water after removing toluene using an evaporator to coagulate the polymer, the same procedure was followed as in Comparative Example 2 to obtain a polyether rubber (A-7).

That is, in Comparative Example 3, toluene was removed using an evaporator to coagulate the polymer, then the polymer was vacuum-dried at 60°C for 15 hours, and the polymer thus obtained was washed with pure water by being immersed in twice as much weight of pure water at 23°C for 12 hours. Thereafter, supernatant water and the polymer were separated by filtration, and the obtained polymer was air-dried and then vacuum-dried at 60°C for 12 hours to obtain a polyether rubber (A-7).

Preparation of Polyether Rubber Composition

Except for using the polyether rubber (A-7) obtained above in place of the polyether rubber (A-1), the same procedure was followed as in Example 1 to obtain, and evaluate, a polyether rubber composition. The results are shown in Table 1.

(Comparative Example 4)

Production of Polyether Rubber

Except for performing a washing of the polymer with ethanol in place of pure water after removing toluene using an evaporator to coagulate the polymer, the same procedure was followed as in Comparative Example 3 to obtain a polyether rubber (A-8).

Preparation of Polyether Rubber Composition

Except for using the polyether rubber (A-8) obtained above in place of the polyether rubber (A-1), the same procedure was followed as in Example 1 to obtain, and evaluate, a polyether rubber composition. The results are shown in Table 1.

[Table 1]

**Table 1**

| | | Example | | | | Comparative Example | | | |
|---|---|---|---|---|---|---|---|---|---|
| | | 1 | 2 | 3 | 4 | 1 | 2 | 3 | 4 |
| Coagulation step | Coagulation method | Steam stripping | | | | Coagulation by solvent concentration | | | |
| | Taking-out temperature (°C) of steam stripping | 40 | 40 | 40 | 60 | 90 | - | - | - |
| Washing step | Acetone washing (washing time) | 24hr | 8hr | No washing | No washing | No washing | No washing | - | - |
| | Pure-water washing (washing time) | - | - | | | | | 12hr | - |
| | Ethanol washing (washing time) | - | - | | | | | - | 12hr |
| Cross-linked rubber | Acetone extraction amount (wt%) | 0.5 | 1.5 | 2.5 | 3.5 | 4.5 | 5.0 | 4.5 | 4.0 |
| | Photoreceptor contamination (room-temperature conditions) | A | A | A | A | B | B | A | A |
| | Photoreceptor contamination (high-temperature, high-humidity conditions) | A | A | A | B | C | C | C | C |

As shown in Table 1, the cross-linked rubbers obtained by cross-linking a polyether rubber composition containing a polyether rubber and a cross-linking agent, the polyether rubber containing an epihalohydrin monomer unit and an ethylene oxide monomer unit and having a ratio of content of the ethylene oxide monomer unit of 50 to 80 mol% in the total monomer unit, wherein the acetone extraction amount is 3.5 wt% or less, effectively suppressed photoreceptor contamination under not only room-temperature conditions but also high-temperature, high-humidity conditions, and it was possible to evaluate the cross-linked rubbers as being capable of suppressing photoreceptor contamination even when used for a long period of time (Examples 1 to 4).

Further, when the volume resistivity values (23°C, 50% RH, applied voltage 1000 V) of the cross-linked rubbers of Examples 1 to 4 were measured, $\log_{10}$ (volume resistivity values) was all 8.3 or less, and thus the cross-linked rubbers also had reduced volume resistivity values.

On the other hand, all cross-linked rubbers having an acetone extraction amount exceeding 3.5 wt% allowed photoreceptor contamination under high-temperature, high-humidity conditions, and it was possible to evaluate the cross-linked rubbers as exhibiting significant photoreceptor contamination when used for a long period of time (Comparative Examples 1 to 4) .

**Claims**

1. A cross-linked rubber obtained by cross-linking a polyether rubber composition containing a polyether rubber and a cross-linking agent, wherein

   the polyether rubber contains an epihalohydrin monomer unit and an ethylene oxide monomer unit and has a ratio of content of the ethylene oxide monomer unit of 50 to 80 mol% in a total monomer unit, and
   an acetone extraction amount when the cross-linked rubber is immersed in acetone at 23°C for 72 hours is 3.5 wt% or less, measured as described in the description.

**2.** The cross-linked rubber according to claim 1, wherein the ratio of content of the epihalohydrin monomer unit in the polyether rubber is 49 to 19 mol% in the total monomer unit.

**3.** The cross-linked rubber according to claim 1 or 2, wherein the polyether rubber further contains a vinyl group-containing oxirane monomer unit in a ratio of 15 to 1 mol% in the total monomer unit.

**4.** A conductive roll having the cross-linked rubber according to any one of claims 1 to 3.

**5.** A method of production of a polyether rubber containing an epihalohydrin monomer unit and an ethylene oxide monomer unit and having a ratio of content of the ethylene oxide monomer unit of 50 to 80 mol% in a total monomer unit, the method comprising:

copolymerizing a monomer mixture containing an epihalohydrin and ethylene oxide in a solvent to obtain a polymer solution;
coagulating a polymer from the polymer solution by steam stripping to obtain a crumb slurry containing a crumbed polymer;
cooling the crumb slurry; and
taking out the polymer from the crumb slurry when the crumb slurry is cooled to 60°C or less.

**6.** The method of production of a polyether rubber according to claim 5, further comprising washing the polymer with acetone after taking out the polymer from the crumb slurry.

**7.** The method of production of a polyether rubber according to claim 5 or 6, wherein the ratio of content of the epihalohydrin monomer unit in the polyether rubber is 49 to 19 mol% in the total monomer unit.

**8.** The method of production of a polyether rubber according to any one of claims 5 to 7, wherein the polyether rubber further contains a vinyl group-containing oxirane monomer unit in a ratio of 15 to 1 mol% in the total monomer unit.

**9.** A method of production of a cross-linked rubber, the method comprising:

adding a cross-linking agent to the polyether rubber obtained by the production method according to any one of claims 5 to 8 to obtain a polyether rubber composition; and
cross-linking the polyether rubber composition.

**Patentansprüche**

**1.** Ein vernetzter Kautschuk, erhalten durch Vernetzen einer Polyetherkautschukzusammensetzung, enthaltend einen Polyetherkautschuk und ein Vernetzungsmittel, wobei

der Polyetherkautschuk eine Epihalogenhydrin-Monomereinheit und eine Ethylenoxid-Monomereinheit enthält und ein Verhältnis des Gehalts der Ethylenoxid-Monomereinheit von 50 bis 80 Mol-% in einer gesamten Monomereinheit aufweist, und
eine Aceton-Extraktionsmenge, wenn der vernetzte Kautschuk 72 Stunden lang bei 23°C in Aceton eingetaucht wird, 3,5 Gew.-% oder weniger, gemessen wie in der Beschreibung erläutert, beträgt.

**2.** Der vernetzte Kautschuk nach Anspruch 1, wobei das Verhältnis des Gehalts der Epihalogenhydrin-Monomereinheit in dem Polyetherkautschuk 49 bis 19 Mol-% in der gesamten Monomereinheit beträgt.

**3.** Der vernetzte Kautschuk nach Anspruch 1 oder 2, wobei der Polyetherkautschuk ferner eine vinylgruppenhaltige Oxiran-Monomereinheit in einem Verhältnis von 15 bis 1 Mol-% in der gesamten Monomereinheit enthält.

**4.** Eine leitfähige Walze mit dem vernetzten Kautschuk nach einem der Ansprüche 1 bis 3.

**5.** Ein Verfahren zur Herstellung eines Polyetherkautschuks, der eine Epihalogenhydrin-Monomereinheit und eine Ethylenoxid-Monomereinheit enthält und ein Verhältnis des Gehalts der Ethylenoxid-Monomereinheit von 50 bis 80 Mol-% in einer gesamten Monomereinheit aufweist, wobei das Verfahren umfasst:

Copolymerisieren einer Monomermischung, enthaltend ein Epihalogenhydrin und Ethylenoxid, in einem Lösungsmittel, um eine Polymerlösung zu erhalten;

Koagulieren eines Polymers aus der Polymerlösung durch Dampfstrippen, um eine Krümelaufschlämmung zu erhalten, die ein krümeliges Polymer enthält;

Abkühlen der Krümelaufschlämmung; und

Entnehmen des Polymers aus der Krümelaufschlämmung, wenn die Krümelaufschlämmung auf 60°C oder weniger abgekühlt ist.

**6.** Das Verfahren zur Herstellung eines Polyetherkautschuks nach Anspruch 5, ferner umfassend das Waschen des Polymers mit Aceton nach dem Entnehmen des Polymers aus der Krümelaufschlämmung.

**7.** Das Verfahren zur Herstellung eines Polyetherkautschuks nach Anspruch 5 oder 6, wobei das Verhältnis des Gehalts der Epihalogenhydrin-Monomereinheit in dem Polyetherkautschuk 49 bis 19 Mol-% der gesamten Monomereinheit beträgt.

**8.** Das Verfahren zur Herstellung eines Polyetherkautschuks nach einem der Ansprüche 5 bis 7, wobei der Polyetherkautschuk ferner eine vinylgruppenhaltige Oxiran-Monomereinheit in einem Verhältnis von 15 bis 1 Mol-% in der gesamten Monomereinheit enthält.

**9.** Ein Verfahren zur Herstellung eines vernetzten Kautschuks, wobei das Verfahren umfasst:

Zugeben eines Vernetzungsmittels zu dem durch das Herstellungsverfahren nach einem der Ansprüche 5 bis 8 erhaltenen Polyetherkautschuk, um eine Polyetherkautschukzusammensetzung zu erhalten; und

Vernetzen der Polyetherkautschukzusammensetzung.

**Revendications**

**1.** Caoutchouc réticulé obtenu en réticulant une composition de caoutchouc polyéther contenant un caoutchouc polyéther et un agent de réticulation, dans lequel

le caoutchouc polyéther contient un motif monomère d'épihalohydrine et un motif monomère d'oxyde d'éthylène et a une proportion en teneur du motif monomère d'oxyde d'éthylène de 50 à 80 % en mole dans un motif monomère total, et

une quantité d'extraction d'acétone lorsque le caoutchouc réticulé est immergé dans de l'acétone à 23 °C pendant 72 heures est de 3,5 % en poids ou moins, mesurée tel que décrit dans la description.

**2.** Caoutchouc réticulé selon la revendication 1, dans lequel la proportion en teneur du motif monomère d'épihalohydrine dans le caoutchouc polyéther est de 49 à 19 % en mole dans le motif monomère total.

**3.** Caoutchouc réticulé selon la revendication 1 ou 2, dans lequel le caoutchouc polyéther contient en outre un motif monomère d'oxirane contenant un groupe vinyle en une proportion de 15 à 1 % en mole dans le motif monomère total.

**4.** Rouleau conducteur ayant le caoutchouc réticulé selon l'une quelconque des revendications 1 à 3.

**5.** Procédé de production d'un caoutchouc polyéther contenant un motif monomère d'épihalohydrine et un motif monomère d'oxyde d'éthylène et ayant une proportion en teneur du motif monomère d'oxyde d'éthylène de 50 % à 80 % en mole dans un motif monomère total, le procédé comprenant:

copolymériser un mélange de monomères contenant une épihalohydrine et un oxyde d'éthylène dans un **solvant pour** obtenir une solution de polymère,

faire coaguler un polymère à partir de la solution de polymère par un entraînement à la vapeur pour obtenir une barbotine en granules contenant un polymère en granules,

refroidir la barbotine en granules, et

extraire le polymère de la barbotine en granules lorsque la barbotine en granules est refroidie jusqu'à 60 °C ou moins.

**6.** Procédé de production d'un caoutchouc polyéther selon la revendication 5, comportant en outre le lavage du polymère à l'acétone après l'extraction du polymère de la barbotine en granules.

7. Procédé de production d'un caoutchouc polyéther selon la revendication 5 ou 6, dans lequel la proportion en teneur du motif monomère d'épihalohydrine dans le caoutchouc polyéther est de 49 à 19 % en mole dans le motif monomère total.

8. Procédé de production d'un caoutchouc polyéther selon l'une quelconque des revendications 5 à 7, dans lequel le caoutchouc polyéther contient en outre un motif monomère d'oxirane contenant un groupe vinyle en une proportion de 15 à 1 % en mole dans le motif monomère total.

9. Procédé de production d'un caoutchouc réticulé, le procédé comprenant :

ajouter un agent de réticulation au caoutchouc polyéther obtenu par le procédé de production selon l'une quelconque des revendications 5 à 8 pour obtenir une composition de caoutchouc polyéther, et
faire réticuler la composition de caoutchouc polyéther.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011032339 A
- JP 2006039394 A
- JP 3515797 B
- JP 46027534 A
- JP 56051171 A
- JP 432945 A
- JP 457751 A
- JP 363394 A
- JP 3223978 B